# EUROPEAN PATENT APPLICATION

(11) **EP 1 953 942 A1**
(43) Date of publication of application: **06.08.2008**
(21) Application number: 06835024.8
(22) Date of filing: 20.12.2006
(51) Int. Cl.: H04J 15/00, H04B 7/08

(54) **RADIO TRANSMITTING APPARATUS AND RADIO TRANSMITTING METHOD**

(30) Priority: 22.12.2005 JP 2005370582
(71) Applicant: MATSUSHITA ELECTRIC INDUSTRIAL CO., LTD., Osaka 571-8501 (JP)
(72) Inventor: HOSHINO, Masayuki co Matsushita Electric Ind. Co.Ltd, 2-1-61, Shiromi, Chuo-ku, Osaka 540-6207 (JP); MIYOSHI, Kenichi c/o Matsushita Electric Ind.Co.Ltd., 2-1-61, Shiromi, Chuo-ku, Osaka 540-6207 (JP); YUDA, Yasuaki c/o Matsushita Electric Ind.Co.Ltd., 2-1-61, Shiromi, Chuo-ku, Osaka 540-6207 (JP); IMAI, Tomohiro c/o Matsushita Electric Ind.Co.Ltd., 2-1-61, Shiromi, Chuo-ku, Osaka 540-6207 (JP)
(74) Representative: Grünecker, Kinkeldey, Stockmair & Schwanhäusser Anwaltssozietät
(86) International application number: PCT/JP2006/325404
(87) International publication number: WO 2007/072874

(57) **Abstract**

A radio transmitting apparatus and a radio transmitting method wherein the loss of transmission efficiency is suppressed to improve the reception quality of pilots received by a receiver apparatus. In the present apparatus and method, in a case of transmitting a pilot block at one of two transmission antennas, the areas of data blocks placed immediately before and after the pilot block are reduced, and the CP of the pilot block is expanded by the amount of that reduction. On the other hand, it is arranged that the interval of transmitting the expanded CP and pilot block be an interval of halting the transmission at the other transmission antenna.

## Description

### Technical Field

The present invention relates to a radio transmitting apparatus and a radio transmission method in aMIMO (Multiple-Input Multiple-Output) system having a plurality of antennas.

### Background Art

As an uplink radio access scheme of a next-generation communication system, studies are being conducted for a frequency domain equalization single carrier transmission scheme using a cyclic prefix (CP) in recent years. In the frequency domain equalization single carrier transmission scheme, data symbols assigned in the time domain are transmitted with a single carrier.

The frequency domain equalization single carrier transmission scheme generates a signal by attaching a CP, which is a copy of a predetermined portion at the rear end of a data block, to the beginning of the data block. The single carrier signal with a CP as such is transmitted from a transmitting apparatus, the direct wave and a delayed wave are combined in a propagation path and the combined signal arrives at a receiving apparatus.

The receiving apparatus performs timing synchronization processing on the received signal and extracts a 1 block length signal from the beginning of the block of the direct wave. The extracted signal includes the direct wave components, delayed wave components and noise components at the receiving apparatus and is combined with these components. The extracted signal is converted from the time domain signal into a frequency domain signal and is subjected to equalization processing on waveform distortion in the frequency domain (frequency domain equalization). By this means, the extracted signal is compensated so as to have flat characteristics in the frequency domain. The signal subjected to frequency domain equalization is converted into the time domain signal again and demodulated.

On the other hand, a MIMO system having a plurality of antennas in a transmitting apparatus and a receiving apparatus is planned for increased capacity in radio communication systems.

A MIMO transmitting apparatus divides generated signals into a plurality of groups of signals (each of signals being referred to as a "stream") and transmits the streams from a plurality of transmitting antennas simultaneously. In a MIMO receiving apparatus, a received signal contains the streams that interfere with each other, and so it is necessary to separate the streams from the received signal.

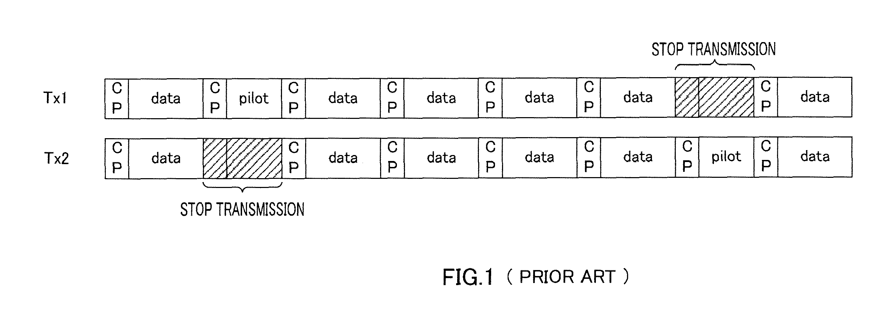

Separating processing includes techniques such as spatial filtering and maximum likelihood method, and high accuracy channel estimation is required for these methods to utilize channel path conditions actively. To meet the requirement of this channel estimation accuracy, pilots quadrature between transmitting antennas are used. To be more specific, specific symbols are transmitted from one antenna only and stopped transmission from other antennas. FIG.1 shows the frame formats transmitted from two transmitting antennas, Tx1 and Tx2. In the figure, a cyclic prefix is referred to as a "CP". Non-patent Document 1: R1-050618 "Throughput Evaluations Using MIMO Multiplexing in Evolved UTRA Uplink"

### Disclosure of Invention

### Problems to be Solved by the Invention

However, in a MIMO system, there is a problem that a pilot signal is suffered from interference between paths and interference between antennas, and so, channel estimation accuracy deteriorates significantly. This problem will be explained below using the figures.

A pilot signal transmission method shown in FIG.1 presumes that, in a period of transmitting a pilot signal for transmitting antenna 2 (Tx2), to stop transmission from transmitting antenna 1 (Tx1), received quality acquired with a pilot signal for Tx2 is S₂/N₂. Further, S₂ is a signal component of Tx2 and N₂ is a noise component of Tx2.

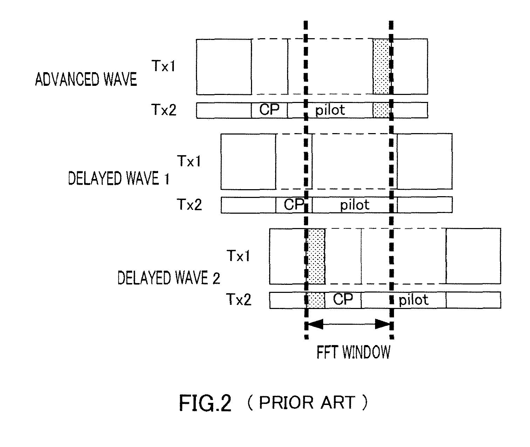

Here, three waves of the direct wave, a delayed wave 1 and a delayed wave 2 are produced from a transmission signal in a radio period, and FIG.2 shows these. In the receiving apparatus, FFT (Fast Fourier Transform) processing is performed at the timing of the FFT window shown in FIG.2 and the pilot signal for Tx2 is extracted.

At this time, focusing on the direct wave, in the FFT window, the signal of the block next to the pilot block gets mixed with the tail symbols as shown in a shade. Moreover, upon focusing on the delayed wave 2, in the FFT window, the signal of the block immediately before the pilot block gets mixed with the beginning symbols as shown in a shade. When signals immediately before and after a pilot block get mixed in the FFT window as such, these signals degrade received quality of the pilot signal as interference components.

If interference components of Tx1 and Tx2 contained in the direct wave specify I₁,ₚₒₛₜ and I₂,ₚₒₛₜ, and if interference components of Tx1 and Tx2 contained in the delayed wave 2 specify I_{1,pre} and I₂,ₚᵣₑ, received quality of the pilot signal containing interference components shown in shades is S₂/(N₂ + I_{1,post} + I_{2,post} + I_{1,pre} + I_{2, pre}) When there are factors to increase the shaded area, such as when received power of Tx1 is greater than of Tx2, and, when timing difference is greater from the FFT window, the pilot signals much contain interference components, and so, received quality deteriorates.

On the other hand, with this method, simply increasing the length of the CP is possible such that the interference components are excluded in the FFT window, however, this method decreases the number of symbols for data transmission use, and consequently, degrades transmission rate.

It is therefore an object of the present invention to provide a radio transmitting apparatus and radio transmission method that reduce transmission rate decrease and improve received quality of pilots received at a receiving apparatus.

### Means for Solving the Problem

The transmitting apparatus of the present invention adopts a configuration including: a plurality of transmitting antennas; an antenna arrangement adjusting section that assigns a pilot signal to one of the plurality of transmitting antennas and stops transmission from the rest of the plurality of transmitting antennas for a transmission period and before and after the transmission period for the pilot signal; a transmitting section that transmits the pilot signal from the one of the plurality of transmitting antennas.

The transmission method of the present invention includes an antenna arrangement adjusting step of assigning a pilot signal to one of a plurality of transmitting antennas and stopping transmission from the rest of the plurality of transmitting antennas for a transmission period and before and after the transmission period for the pilot signal; and a transmission step of transmitting the pilot signal from the one of the plurality of transmitting antennas.

### Advantageous Effect of the Invention

According to the present invention, loss of transmission efficiency can be reduced, and received quality of pilots received in the receiving apparatus can be improved.

### Brief Description of Drawings

FIG.1 shows frame formats;
FIG.2 explains occurring interference;
FIG.3 is a block diagram showing a configuration of the transmitting apparatus according to Embodiment 1 of the present invention;
FIG.4 illustrates the control of the changeover switch in the first transmission processing section shown in FIG.3;
FIG.5 illustrates the control of the changeover switch in the second transmission processing section shown in FIG.3;
FIG.6 shows the transmission formats according to Embodiment 1 of the present invention;
FIG.7 is a flowchart showing the operations of the antenna arrangement adjustment section shown in FIG.3;
FIG.8 is a block diagram showing the configuration of the receiving apparatus according to Embodiment 1 of the present invention;
FIG.9 shows the extract of the pilot signals in the CP removing section shown in FIG.8;
FIG.10 is a block diagram showing the configuration of the transmitting apparatus according to Embodiment 2 of the present invention;
FIG.11 shows the extract of the pilot signals according to Embodiment 2 of the present invention;
FIG.12 shows the transmission formats according to Embodiment 2 of the present invention;
FIG.13 shows the transmission formats according to Embodiment 3 of the present invention;
FIG.14 is a block diagram showing the configuration of the receiving apparatus according to Embodiment 3 of the present invention;
FIG.15 shows the changing timings of the FFT window in the CP removing section shown in FIG.14; and
FIG.16 is a block diagram showing the other configuration of the receiving apparatus.

### Best Mode for Carrying Out the Invention

Now, embodiments of the present invention will be described in detail with reference to the accompanying drawings. Further, in embodiments, the components having the same functions will be assigned the same reference numerals and overlapping descriptions will be omitted.

### (Embodiment 1)

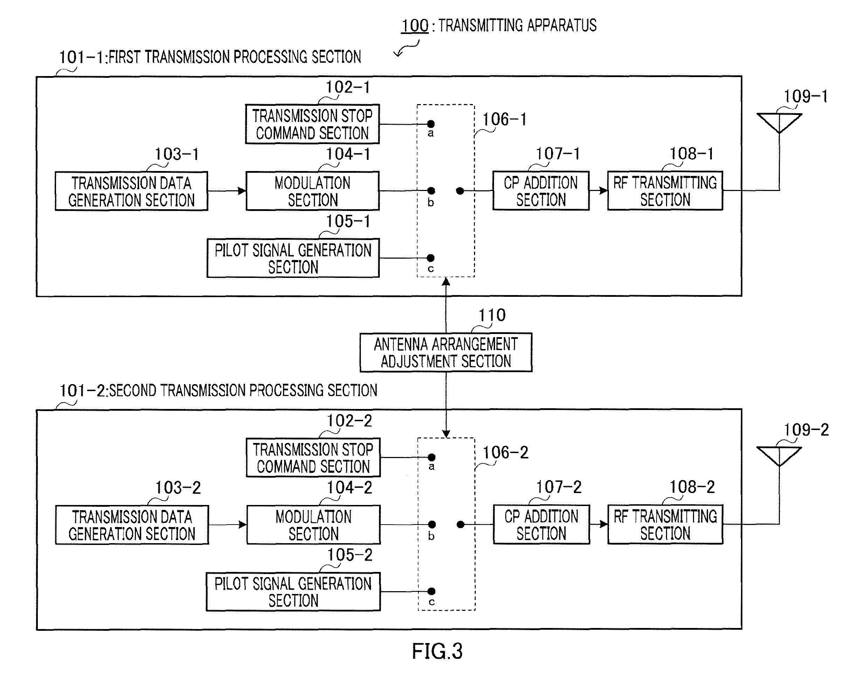

FIG.3 is a block diagram showing a configuration of transmitting apparatus 100 according to Embodiment 1 of the present invention. In this figure, transmitting apparatus 100 has first transmission processing section 101-1, second transmission processing section 101-2 and antenna arrangement adjustment section 110. Moreover, first transmission processing section 101-1 has transmitting antenna 109-1, and second transmission processing section 101-2 has transmitting antenna 109-2. The internal configurations of first transmission processing section 101-1 and second transmission processing section 101-2 are the same, and so, first transmission processing section 101-1 will be explained below.

Transmission stop command section 102-1 commands RF transmitting section 108-1 to stop transmission (transmission OFF) from first transmission processing section 101-1 via CP addition section 107-1 (described later). The output terminal of transmission stop command section 102-1 is connected to the input terminal "a" of changeover switch 106-1.

Transmission data generation section 103-1 generates transmission data and outputs the generated transmission data to modulation section 104-1. Modulation section 104-1 performs modulation processing of the transmission data outputted from transmission data generation section 103-1 and generates transmission symbols. The output terminal of modulation section 104-1 is connected to the input terminal "b" of changeover switch 106-1.

Pilot signal generation section 105-1 generates a pilot signal. The output terminal of pilot signal generation section 105-1 is connected to the input terminal "c" of changeover switch 106-1.

Changeover switch 106-1 has the input terminal "a" connected to the output terminal of transmission stop command section 102-1, the input terminal "b" connected to the output terminal of modulation section 104-1, and the input terminal "c" connected to the output terminal of pilot signal generation section 105-1. According to the command by antenna arrangement adjustment section 110 (described later), changeover switch 106-1 connects one of the input terminals "a" to "c" to the output terminal connected to the input terminal of CP addition section 107-1. That is, one of the transmission stop command, the transmission symbols or the pilot signal is outputted to CP addition section 107-1.

CP addition section 107-1 copies the predetermined number of symbols from the rear end of every block, which is an FFT processing unit, in the signal outputted from changeover switch 106-1, to attach them as a cyclic prefix (CP) to the beginning of the block. The signal with the CP is transmitted to RF transmitting section 108-1.

RF transmitting section 108-1 performs predetermined radio transmission processing such as D/A conversion, up-conversion and amplification of the signal outputted from CP addition section 107-1, and transmits the signal after radio transmission processing from transmitting antenna 109-1 (Tx1). Further, when RF transmitting section 108-1 receives the transmission stop command from transmission stop command section 102-1, RF transmitting section 108-1 stops transmission.

Antenna arrangement adjustment section 110 controls changeover switch 106-1 in first transmission processing section 101-1 and changeover switch 106-2 of second transmission processing section 101-2. The changeover control will be described in detail later.

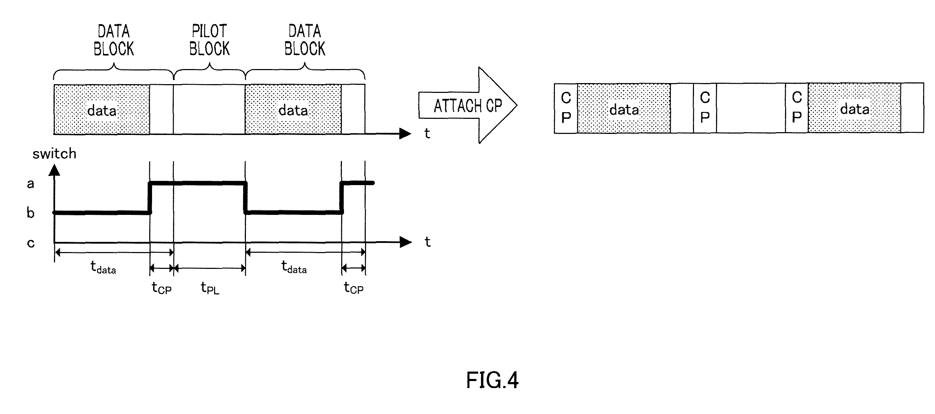

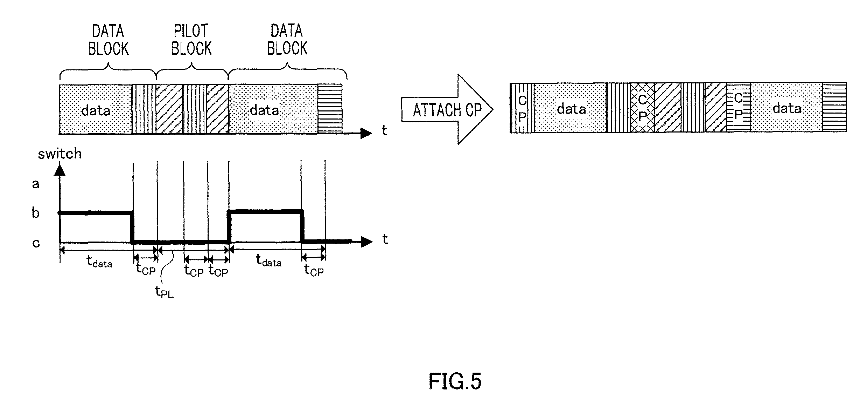

Next, the operations of transmitting apparatus 100 having the configuration above will be explained as referring to FIGs.4 and 5. A case will be described here where the pilot signal is transmitted from Tx2. FIG.4 shows the control of changeover switch 106-1 in first transmission processing section 101-1 (hereinafter "first changeover switch"), and FIG.5 shows the control of changeover switch 106-2 in second transmission processing section 101-2 (hereinafter "second changeover switch").

First, to assign a data block immediately before the pilot block, antenna arrangement adjustment section 110 controls the input terminal of the first changeover switch to the input terminal "b" and the input terminal of the second changeover switch to the input terminal "b." The first and second changeover switches are connected to the input terminal "b" during t_{data} - t_{CP}. That is, the data block assigned immediately before the pilot block has a data area reduced by the CP length.

Then, antenna arrangement adjustment section 110 controls the input terminal of the first changeover switch to the input terminal "a" and the input terminal of the second changeover switch to the input terminal "c." The first changeover switch is connected to the input terminal "a" during t_{CP} + t_{PL}, and second changeover switch is connected to the input terminal "c" during t_{CP} + t_{PL}. Further, pilot signal generation section 105-2 outputs the pilot signal from the position twice the CP length back from the rear end of the pilot signal while the second changeover switch is connected to the input terminal "c", and continues outputting the pilot signal in a normal order. At this time, the transmission from first transmission processing section 101-1 is stopped, and the pilot signal in a rearranged order is outputted from second transmission processing section 101-2.

Then, to assign the data block immediately after the pilot block, antenna arrangement adjustment section 110 controls the input terminal of the first changeover switch to the input terminal "b" and the input terminal of the second changeover switch to the input terminal "b." The first and second changeover switches are connected to the input terminal "b" during t_{data}- t_{CP}. That is, the data block assigned immediately after the pilot block has a data area reduced by the CP length as well as the data block assigned immediately before the pilot block.

Furthermore, antenna arrangement adjustment section 110 controls the input terminal of the first changeover switch to the input terminal "a" and the input terminal of the second changeover switch to the input terminal "c." The first changeover switch is connected to the input terminal "a" during t_{CP}, and the second changeover switch is connected to the input terminal "c" during t_{CP}.

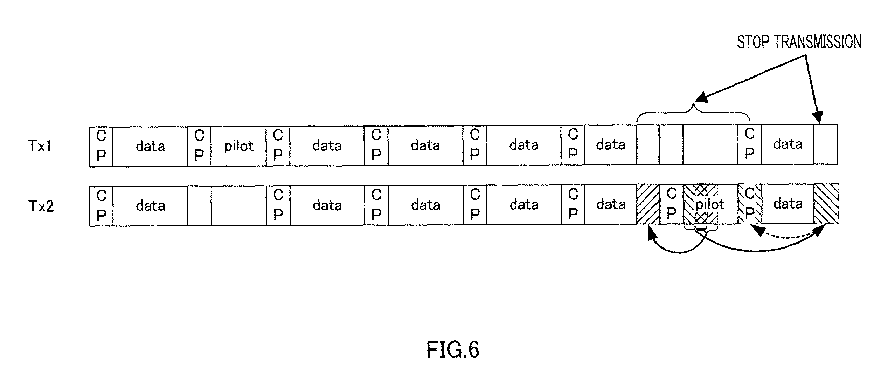

Given the signals outputted from the first changeover switch and the second changeover switch by this control of antenna arrangement adjustment section 110, CP addition sections 107-1 and 107-2 each copy a predetermined number of symbols at the rear end of a block and attach a CP to the beginning of the block. The transmission formats generated as such are as shown in FIG.6, the CP length of the pilot signal for Tx2 (transmitting antenna 109-2) is expanded backward and forward, and the transmission stop period is expanded for antenna Tx1 (transmitting antenna 109-1), from which the pilot signals are not transmitted.

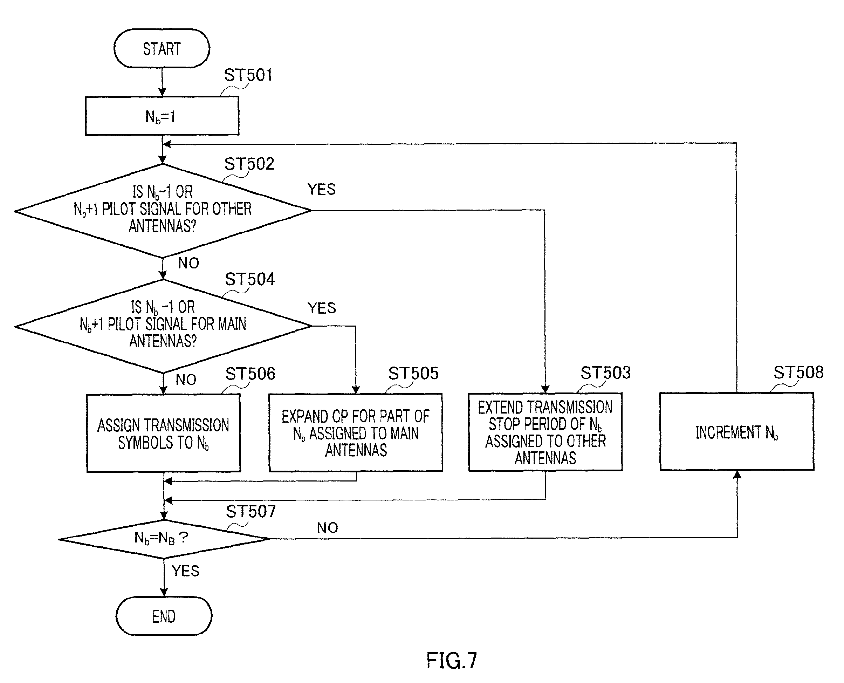

Next, the operations of antenna arrangement adjustment section 110 of transmitting apparatus 100 shown in FIG.3, using FIG.7. Here, one of a plurality of transmitting antennas is referred to as the "main antenna" and the rest of the antennas is referred to as the "other antenna." Referring to FIG 7, in step (hereinafter abbreviated as "ST") 501, antenna arrangement adjustment section 110 sets the block number N_{b} to 1, and, in ST502, determines whether or not N_{b}-1 or N_{b}+1 is the pilot signal transmitted from the other antenna. If N_{b}-1 or N_{b}+1 is the pilot signal transmitted from the other antenna, the step moves to ST503, and, if N_{b}-1 or N_{b}+1 is not the pilot signal transmitted from the other antenna, the step moves to ST504.

In ST503, antenna arrangement adjustment section 110 stops transmitting the N_{b} block transmitted from the other antenna and extends the transmission stop period, and the step moves to ST507.

In ST504, antenna arrangement adjustment section 110 determines whether or not N_{b}-1 or N_{b}+1 is the pilot signal transmitted from the main antenna, and, if N_{b}-1 or N_{b}+1 is the pilot signal transmitted from the main antenna, the step moves to ST505, and, if N_{b}-1 or N_{b}+1 is not the pilot signal transmitted from the main antenna, the step moves to ST506.

In ST505, antenna arrangement adjustment section 110 expands the CP for a part of N_{b} transmitted from the main antenna, and the step moves to ST507.

In ST506, the transmission symbols are assigned respective N_{b}'s transmitted from the main antenna and the other antenna, and, in ST507, antenna arrangement adjustment section 110 determines whether or not N_{b} is the block number N_{B} (i.e. N_{b}= N_{B}) that shows the total number of blocks in a frame. If N_{b} is N_{B}, the operations of antenna arrangement adjustment section 110 are finished, and, if N_{b} is not N_{B}, the step moves to ST508.

In ST508, antenna arrangement adjustment section 110 increments N_{b}, and the step returns to ST502, and, processing ST502 to ST507 is repeated until it is determined N_{b} is N_{B} in ST507.

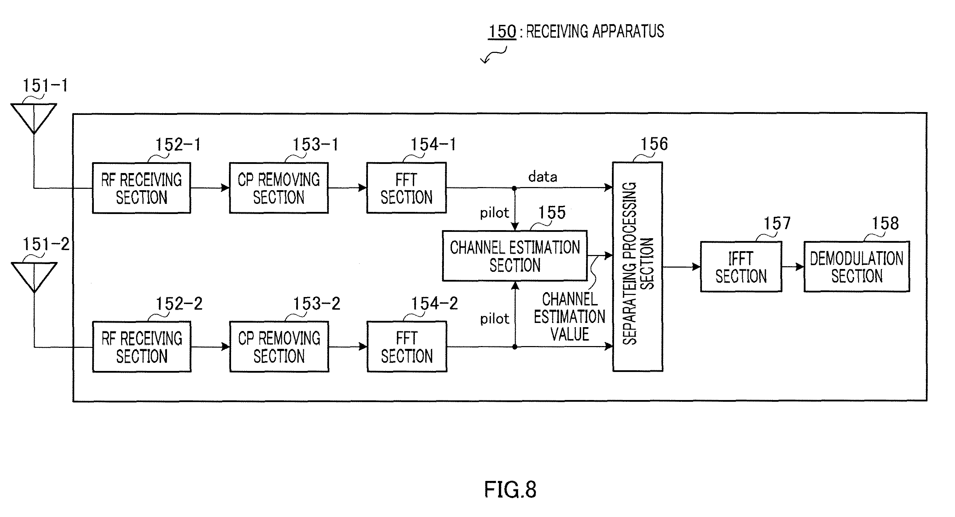

FIG. 8 is ablock diagram showing the configuration of receiving apparatus 150 according to Embodiment 1 of the present invention. In this figure, RF receiving sections 152-1 and 152-2 perform predetermined radio processing such as down-conversion or A/D conversion for the received signals via antennas 151-1 and 151-2, respectively, and outputs the signals after radio receiving processing to CP removing sections 153-1 and 153-2, respectively.

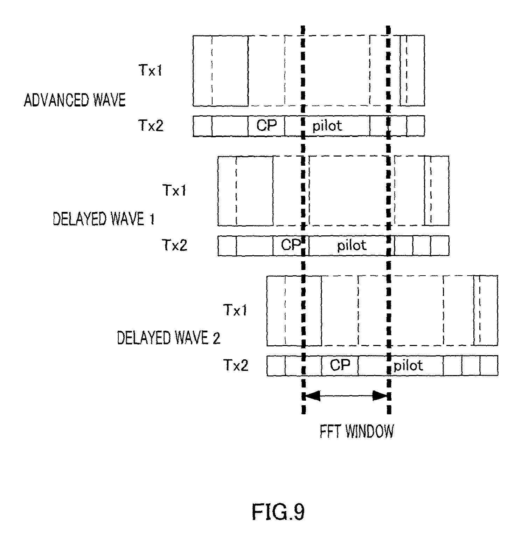

CP removing sections 153-1 and 153-2 extract parts other than the CP from the signals outputted from RF receiving sections 152-1 and 152-2 every FFT window, and output the extracted signals to FFT sections 154-1 and 154-2, respectively. FIG.9 shows this extract. FIG.9 shows extracting the pilot signals for transmitting antenna 109-2 (Tx2) at the timings shown in bold dotted lines when the direct wave, the delayed wave 1 and the delayed wave 2 are contained in the received signal. As shown in this figure, the signals immediately before and after the pilot blocks are not contained in the FFT window.

FFT sections 154-1 and 154-2 perform FFT processing on the signals outputted from CP removing sections 153-1 and 153-2 and convert the time domain signals into frequency domain signals. In the signals after FFT processing, the pilot signals are outputted to channel estimation section 155, and the data signals are outputted to separating processing section 156.

Channel estimation section 155 calculates a channel estimation value using the pilot signals outputted from FFT sections 154-1 and 154-2, outputs the calculated channel estimation value to separating processing section 156. Separating processing section 156 separates the data signals outputted from FFT sections 154-1 and 154-2 using the channel estimation value outputted from channel estimation section 155 and outputs the separated signal to IFFT section 157.

IFFT section 157 performs IFFT (Inverse Fast Fourier Transform) processing on the signal outputted from separating processing section 156 and converts the frequency domain signal into a time domain signal. The signal after IFFT processing is outputted to and modulated in demodulation section 158, and data is acquired.

In this way, according to Embodiment 1, with respect to a transmission unit provided with a pilot block transmitted from an antenna and a CP, which is expanded and attached to this pilot block, by setting this transmission unit and the CP lengths immediately before and after this transmission unit as a transmission stop period for other antennas, interference for a pilot signal canbeprevented, so that it is possible to improve received quality of a pilot signal and improve transmission rate.

### (Embodiment 2)

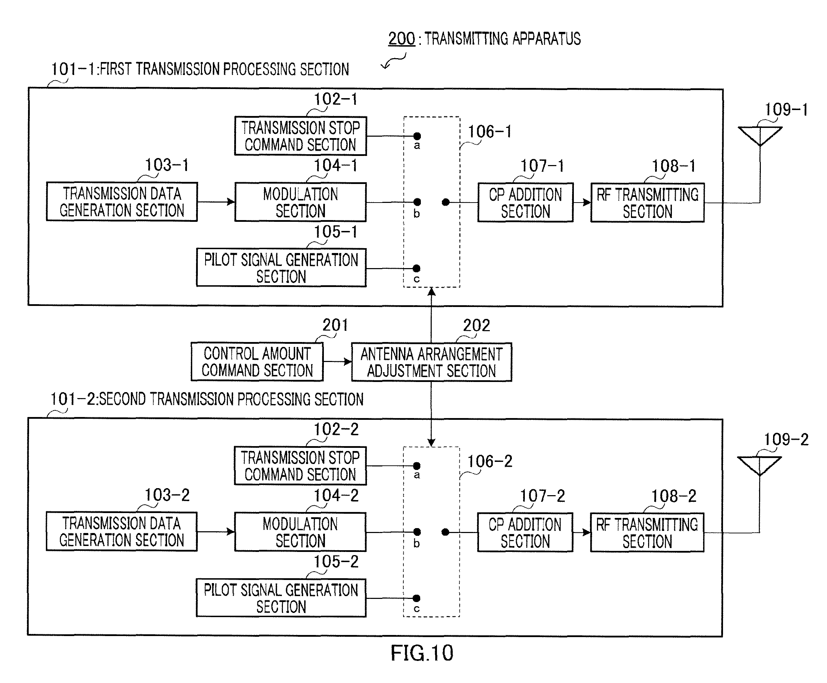

FIG.10 is a block diagram showing the configuration of transmitting apparatus 200 according to Embodiment 2 of the present invention. FIG.10 is different from FIG.3 in that control amount command section 201 is added and antenna arrangement adjustment section 110 is changed to antenna arrangement adjustment section 202.

Control amount command section 201 commands antenna arrangement adjustment section 202 to extend the transmission stop period and expand the CP length in symbol units. To be more specific, control amount command section 201 detects the maximum multipath delayed wave and controls the transmission stop period based on an area of delayed time of the maximum delayed wave.

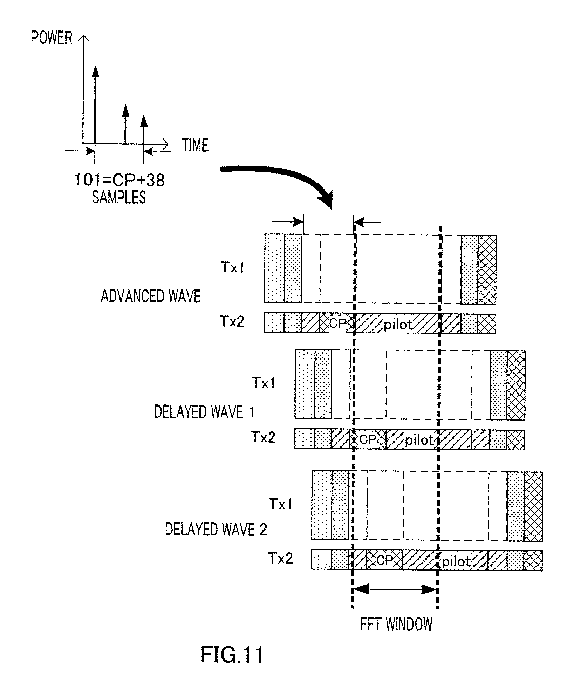

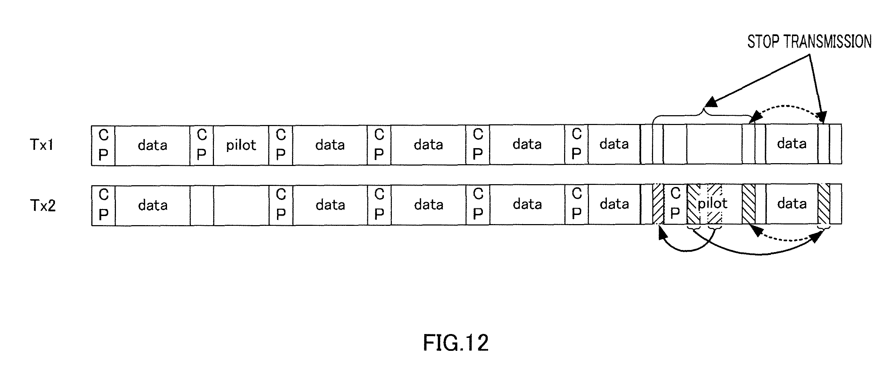

According to the command by control amount command section 201, antenna arrangement adjustment section 202 performs changeover control of the first changeover switch and the second changeover switch. For example, as shown in FIG.11, when the CP length is 63 samples, and when the maximum delay time of the detected multipath is 38 samples, the transmission is stopped during 38 samples immediately before the CP. Moreover, the transmission is stopped during several more samples (i.e. the CP length - a predetermined number of samples) from the position predetermined number of samples back from the tail of the data block assigned immediately after the transmission stop period. In FIG.11, if the delayed wave 2 is the maximum delay wave, the data block immediately before the pilot block is not included in the FFT window, and so interference for the pilot signal can be prevented. By controlling antenna arrangement adjustment section 202 as such and by attaching CP's by CP addition sections 107-1 and 107-2, the transmission formats are shown in FIG.12.

The configuration of the receiving apparatus according to Embodiment 2 of the present invention is the same as shown in FIG.8 of Embodiment 1, and the explanation in detail is omitted.

In this way, according to Embodiment 2, with respect to a transmission unit provided with a pilot block transmitted from one antenna and a CP, which is attached to this pilot block, by placing an area of delayed time of a maximum multipath delayed wave before and after the transmission unit and by setting this period as a transmission stop period for other antennas, it is possible to prevent interference for pilot signals and keep data areas, so that transmission rate can be further improved.

### (Embodiment 3)

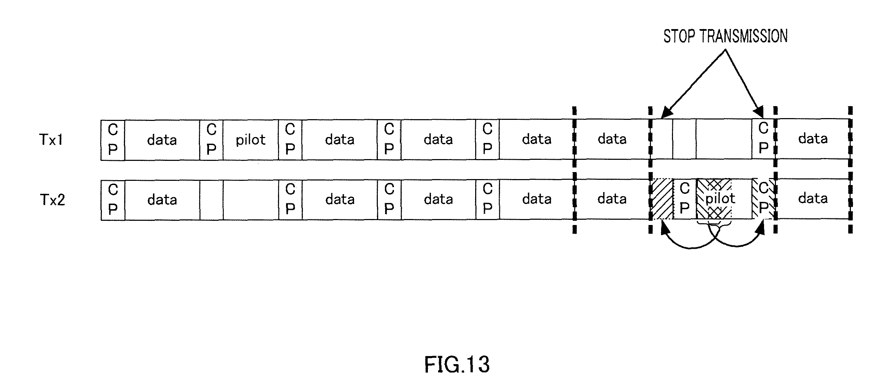

The configuration of the transmitting apparatus according to Embodiment 3 of the present invention is the same as shown in FIG.10 of Embodiment 2, and the explanation in detail is omitted. Further, CP addition sections 107-1 and 107-2 perform not to attach a CP to the data block assigned immediately before the pilot block. The transmission formats generated by this are as shown in FIG.13.

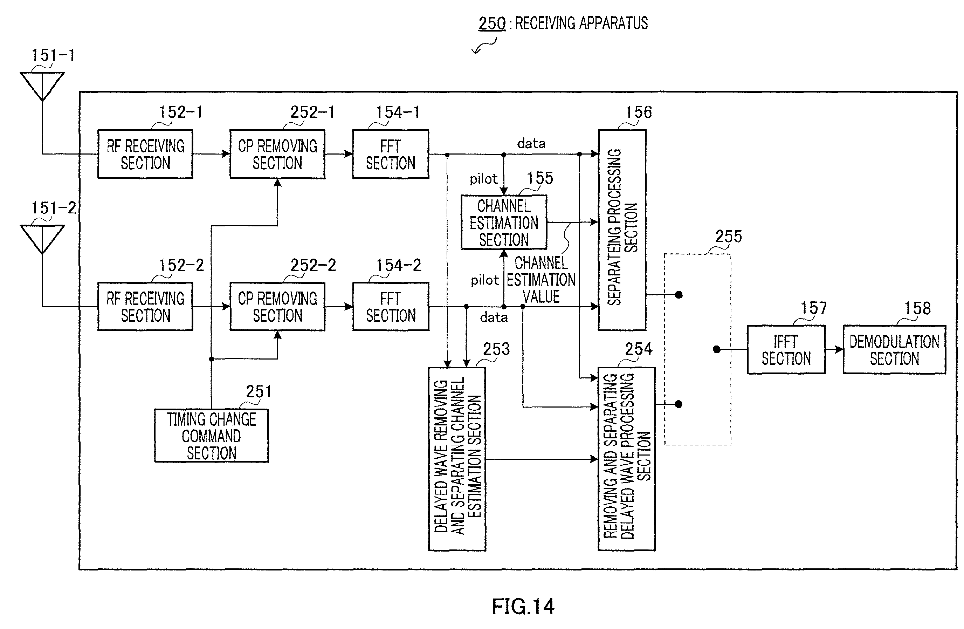

FIG.14 is a block diagram showing the configuration of receiving apparatus 250 according to Embodiment 3 of the present invention. FIG.14 is different from FIG. 8 in that timing change command section 251, delayed wave removing and separating channel estimation section 253, removing and separating delayed wave processing section 254 and changeover switch 255 are added, and CP removing sections 153-1 and 153-2 are changed to CP removing sections 252-1 and 252-2.

Timing change command section 251 commands CP removing sections 252-1 and 252-2 to change the timing of extracting the data block assigned immediately before the pilot block on a per FFT window basis.

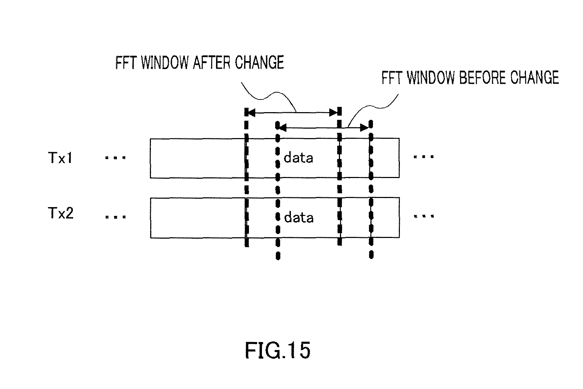

CP removing sections 252-1 and 252-2 extract parts other than the CP's from the signals outputted from RF receiving sections 152-1 and 152-2 every FFT window, and outputs the extracted signals to FFT sections 154-1 and 154-2. When CP removing sections 252-1 and 252-2 receives the command from timing change command section 251, CP removing sections 252-1 and 252-2 extract the data blocks assigned immediately before the pilot blocks at an extracting timing the CP length earlier, as shown in FIG.15.

Channel estimation for removing and separating delayed wave section 253 generates a reference signal for removing and separating delayed wave, using pilot signals outputted from FFT sections 154-1 and 154-2, and outputs the generated reference signal to removing and separating delayed wave processing section 254.

Removing and separating delayed wave processing section 254 calculates a weight such that the reference signal outputted from channel estimation for removing and separating delayed wave section 253 becomes flat in the frequency domain and multiplies the data signals outputted from FFT sections 154-1 1 and 154-2 by the calculated weight, so that, delayed wave components are removed from the data signals. The signals where the delayed wave components are removed are outputted to changeover switch 255.

Changeover switch 255 outputs the data blocks before and after the pilot blocks from removing and separating delayed wave processing section 254 to IFFT section 157, and outputs the rest of the data blocks from separating processing section 156 to IFFT section 157.

In this way, Embodiment 3 does not attach a CP to a data block assigned immediately before a pilot block and keeps the data block, and a delayed wave is removed in the receiving apparatus, so that interference for a pilot signal can be prevented without reducing data areas, thereby improving transmission rate further.

Although cases of a MIMO system formed with two transmitting antennas and two receiving antennas described with the embodiments as an example, the present invention is not limited to this, and the each number of transmitting antennas and receiving antennas is two or more, and is not necessary to be the same numbers.

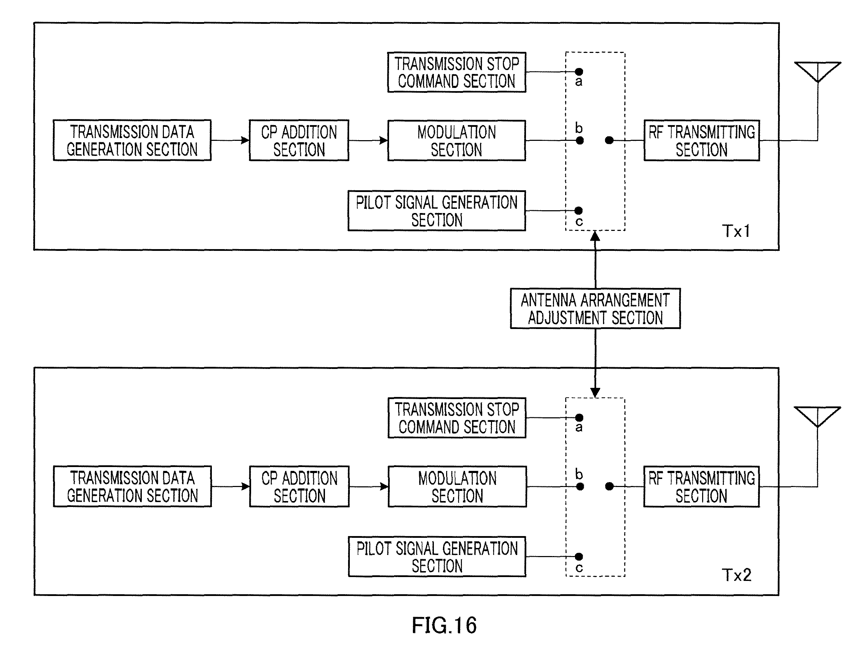

Moreover, although cases have been explained with the embodiments where the CP adding section is connected between the changeover switch and the RF transmitting section, the CP adding section may be connected between the transmission data generation section and the modulation section as shown in FIG.16. Moreover, the configuration of a transmitting apparatus is not limited to the configuration explained in the embodiments above, and other configurations may be possible, as long as the transmission formats shown in FIG.6, FIG.10 and FIG.11 are provided.

Moreover, when power difference is produced between transmitting antennas, and, when pilot signals are transmitted from an antenna with lower power with the embodiments above, by using the transmission formats as shown in FIG.6, FIG.12 and FIG.13, interference for pilot signals can be effectively reduced. FIG.6, FIG.12 and FIG. 13 show cases where power for transmitting antenna 2 is lower than for Tx1, and, when power for transmitting antenna 1 is lower than for Tx2, the transmission formats shown in FIG.6, FIG.12 and FIG.13 are reversed between the transmitting antennas.

Moreover, although with the embodiments above cases have been described where the present invention is configured by hardware, the present invention may be implemented by software.

Each function block employed in the description of the aforementioned embodiment may typically be implemented as an LSI constituted by an integrated circuit. These may be individual chips or partially or totally contained on a single chip. "LSI" is adopted here but this may also be referred to as "IC," "system LSI," "super LSI" or "ultra LSI" depending on differing extents of integration.

Further, the method of circuit integration is not limited to LSI's, and implementation using dedicated circuitry or general purpose processors is also possible. After LSI manufacture, utilization of an FPGA (Field Programmable Gate Array) or a reconfigurable processor where connections and settings of circuit cells within an LSI can be reconfigured is also possible.

Further, if integrated circuit technology comes out to replace LSI's as a result of the advancement of semiconductor technology or a derivative other technology, it is naturally also possible to carry out function block integration using this technology. Application of biotechnology is also possible.

The present application is based on Japanese Patent Application No.2005-370582, filed on December 22, 2005, the entire content of which is expressly incorporated by reference herein.

### Industrial Applicability

The radio transmitting apparatus and the radio transmission method of the present invention have an advantage of reducing transmission rate decrease and improving received quality of pilots received in a receiving apparatus, and are applicable to, for example, radio communication base station apparatuses and radio communication mobile station apparatuses.

## Claims

1. A radio transmitting apparatus comprising:
a plurality of transmitting antennas;
an antenna arrangement adjusting section that assigns a pilot signal to one of the plurality of transmitting antennas and stops transmission from the rest of the plurality of transmitting antennas for a transmission period and before and after the transmission period for the pilot signal; and
a transmitting section that transmits the pilot signal from the one of the plurality of transmitting antennas.

2. The radio transmitting apparatus according to claim 1, wherein the antenna arrangement adjusting section expands a cyclic prefix attached to the pilot signal backward and forward with respect to the transmission period for the pilot signal.

3. The radio transmitting apparatus according to claim 1, wherein the antenna arrangement adjusting section reduces a data area that is transmitted from the rest of the transmitting antennas and that is assigned before and after the transmission period for the pilot signal.

4. The radio transmitting apparatus according to claim 3, wherein the antenna arrangement adjusting section makes a period to reduce the data area assigned before and after the transmission period for the pilot signal, a cyclic prefix length.

5. The radio transmitting apparatus according to claim 3, wherein the antenna arrangement adjusting section makes the period to reduce the data area assigned before and after the transmission period for the pilot signal, a delayed time of a maximum multipath delayed wave.

6. A radio receiving apparatus comprising:
a plurality of receiving antennas;
a receiving section that receives a pilot signal transmitted from one of a plurality of transmitting antennas, and a data signal which is assigned before and after a transmission period for the pilot signal and in which a data area is reduced;
a channel estimation calculation section that calculates a channel estimation value based on the pilot signal;
a separating section that, using the channel estimation value, separates the data signal to sequences for transmitting antennas through which the data signal is transmitted; and
a demodulation section that demodulates the data signal separated to the sequences per transmitting antenna.

7. A radio transmission method comprising:
an antenna arrangement adjusting step of assigning a pilot signal to one of a plurality of transmitting antennas and stopping transmission from the rest of the plurality of transmitting antennas for a transmission period and before and after the transmission period for the pilot signal; and
a transmission step of transmitting the pilot signal from the one of the plurality of transmitting antennas.
